# EUROPÄISCHE PATENTSCHRIFT

(11) **EP 2 004 453 B1**
(45) Veröffentlichungstag und Bekanntmachung des Hinweises auf die Patenterteilung: **26.12.2012**
(21) Anmeldenummer: 07727576.6
(22) Anmeldetag: 30.03.2007
(51) Int. Cl.: B62D 21/15, B60R 19/34

(54) **CRASHBOX UND DÄMPFUNGSANORDNUNG MIT CRASHBOX**
CRASHBOX AND DAMPING ARRANGEMENT WITH A CRASHBOX
CRASHBOX ET SYSTEME D'AMORTISSEMENT AVEC CRASHBOX

(30) Priorität: 05.04.2006 DE 102006015876
(43) Veröffentlichungstag der Anmeldung: 24.12.2008
(73) Patentinhaber: GM Global Technology Operations LLC, Detroit, MI 48265-3000 (US)
(72) Erfinder: BRAUNBECK, Bardo, 55276 Oppenheim (DE); HOCK, Theobald, 63762 Grossostheim (DE)
(74) Vertreter: Strauss, Peter
(86) Internationale Anmeldenummer: PCT/EP2007/053104
(87) Internationale Veröffentlichungsnummer: WO 2007/115952

(56) Entgegenhaltungen:
- EP-A2- 1 160 133
- DE-A1- 10 349 204
- DE-A1- 19 731 342
- DE-B3-102004 060 088
- JP-A- 11 208 392

## Beschreibung

Die vorliegende Erfindung betrifft eine grundplattenlose Crashbox gemäß dem Oberbegriff des Anspruchs 1 und eine Dämpfungsanordnung mit Crashbox gemäß dem Oberbegriff des Anspruchs 9. Eine solche Crashbox und Dämpfungsanordnung sind aus DE 10 2004 060 088 B3 bekannt.

Derartige Crashboxen für Kraftfahrzeuge dienen dazu, im Versicherungscrashtest oder anderen Crashtests einen großen Anteil an der kinetischen Energie, die bei einem Crash oder Aufprall auftritt, aufzunehmen, so dass die hinter der Einleitungsstelle der kinetischen Energie liegende Fahrzeugstruktur unbeschädigt bleibt, und das Fahrzeug eine gute Typschadeneinstufung erhält.
Bekannt sind verschiedenste Arten von Crashboxen, die meist mittels einer Grundplatte an den Kraftfahrzeugrahmen, Vorderahmen oder Hinterrahmen, angeflanscht werden. Für diese Lösungen wird ein umlaufender Rahmenflansch benötigt. Die Verbindung zwischen Grundplatte und Rahmen erfolgt hierbei über mindestens eine Verschraubung, welche im Wesentlichen in Fahrzeuglängsrichtung verschraubt ist, was wegen der Zugänglichkeit zu der Verschraubungsstelle meistens zu einer Beeinträchtigung des Stoßfängerträgerquerschnitts führt. Zudem sind solche Crashboxen aus mehreren Blechteilen zusammengefügt, insbesondere zusammengeschweißt. Werden dann Crashboxen mit unterschiedlichen Längen für verschiedene zusammengeschweißt. Werden dann Crashboxen mit unterschiedlichen Längen für verschiedene Kraftfahrzeugtypen benötigt, sind für jeden Kraftfahrzeugtyp neue Werkzeuge erforderlich.

Andere Crashboxen sehen vor, dass diese als Einschiebelösung ausgebildet sind, bei der die einzuschiebende Crashbox genau die Höhe des Hinterrahmens oder des Vorderrahmens aufweist, damit die stets vertikale Verschraubung den notwendigen Kraftschluss herstellen kann, um die Krafteinleitung von der Crashbox in den Rahmen zu gewährleisten. Bei dieser Ausführung müssen die vertikalen Schrauben durch das Bodenblech geschraubt werden, was bei der Montage zu unergonomischer Körperhaltung beim Verschrauben führt. Zudem muss die Verschraubung abgedichtet werden, da diese in den Innenraum führt, und dorthin keine von außen durchdringende Stoffe wie z.B. Wasser gelangen dürfen.
Aus der EP 1 384 536 ist eine Crashbox für Kraftfahrzeuge bzw. ein Verfahren zur Herstellung dieser Crashbox bekannt. Diese Lösung sieht ein Verfahren zur Herstellung einer Crashbox für Kraftfahrzeuge auf einem Blechhalbzeug sowie eine Crashbox für Kraftfahrzeuge mit einem Mehrfachkammerprofil vor. Das Blechhalbzeug wird dabei durch Biegen oder Falten in ein Mehrfachkammerprofil, insbesondere ein Doppelkammerprofil umgeformt.

Nachteilig an dieser Lösung ist, dass mehrere Arbeitsgänge zum Herstellen des Doppelkammerprofils notwendig sind. Zudem muss bei dieser Lösung eine Befestigungsplatte vorgesehen werden, um eine stabile Crashbox zu realisieren. Weiterhin erfolgt bei dieser Lösung die Befestigung mit dem Rahmen über vertikale Verschraubungen.
Aufgabe der vorliegenden Erfindung ist es, eine Crashbox bzw. eine Dämpfungsanordnung zur Aufnahme von Aufprallenergie mit einer Crashbox zu schaffen, welche für verschiedene Fahrzeugtypen mit unterschiedlichen Rahmensystemen verwendbar ist und welche insbesondere leicht herstellbar und montierbar ist.

Diese Aufgabe wird ausgehend von einer grundplattenlosen Crashbox gemäß dem Oberbegriff des Anspruchs 1 in Verbindung mit den hierauf folgenden kennzeichnenden Merkmalen sowie einer Dämpfungsanordnung zur Aufnahme von Aufprallenergie gemäß dem Oberbegriff des Anspruchs 9 in Verbindung mit den hierauf folgenden kennzeichnenden Merkmalen gelöst.
Vorteilhafte Weiterbildungen der Erfindung sind in den hiervon abhängigen Ansprüchen angegeben.

Die Erfindung schließt die technische Lehre ein, dass eine grundplattenlose Crashbox zur Aufnahme von Aufprallenergie, geeignet zum Einschieben in einen korrespondierenden Trägerrahmen, insbesondere eines Kraftfahrzeugträgerrahmens, in einer Einschubrichtung, mit einem mindestens eine erste Kammer umfassenden verformbaren Profil, wobei das verformbare Profil ferner eine zur ersten kammer guer ... zur Einschubrichtung benachbarte zweite kammer umfasst, wobei die kammern je durch eine Wandung des Profils umgeben sind, wobei eine der Kammern in Einschubrichtung kürzer ausgebildet ist, so dass die andere Kammer einen vorspringenden Bereich aufweist, welcher in den korrespondierenden Trägerrahmen einschiebbar ist, um eine Kopplung zwischen Crashbox und Trägerrahmen zu realisieren, und wobei der vorspringende Bereich mindestens ein erstes Verbindungsmittel zum Verbinden des vorspringenden Bereichs mit dem Trägerrahmen aufweist.

Die Crashbox umfasst ein verformbares Profil, welches durch die Deformationsarbeit bei einem Crashfall die Energie größtenteils absorbiert. Das verformbare Profil weist mindestens eine erste Kammer und eine benachbart dazu ausgebildete zweite Kammer auf, so dass das Profil in etwa rohrförmig mit in Längsrichtung verlaufenden Kammern ausgebildet ist. Die Kammern sind durch Wandungen umgeben. Das so ausgebildete Profil mit den rohrförmigen Kammern kann jeden beliebigen geometrischen Querschnitt aufweisen, ist bevorzugt jedoch als rechteckiger, trapezförmiger oder kreisrunder Querschnitt ausgebildet. Eine der Kammern ist in Einschubrichtung oder in Längsrichtung der Rohrachse kürzer ausgebildet als die andere Kammer. Somit stellt die länger ausgebildete Kammer einen vorspringenden Bereich bereit, welcher in eine entsprechende Öffnung eines Trägerrahmens eingeschoben werden kann. Die kürzere Kammer stellt dagegen einen Anschlag bereit, so dass beim Einschieben genau die Einschublänge durch den vorspringenden Bereich bzw. den Anschlag definiert ist.
Da ein Einschieben allein noch nicht zu einer sicheren Verbindung zwischen Crashbox und Trägerrahmen ausreicht, weist der vorspringende Bereich mindestens ein erstes Verbindungsmittel auf, welches geeignet ist, um den vorspringende Bereich mit dem Trägerrahmen weiter zu verbinden. Insbesondere kann so ein ungewolltes herausbewegen der Crashbox aus dem Trägerrahmen vermieden werden.
Durch die Einschubmöglichkeit kann die Crashbox für verschiedene Kraftfahrzeugtypen eingesetzt werden, wobei diese durch einfaches Einschieben an dem Trägerrahmen angeordnet werden kann. Über die Verbindungsmittel, welche leicht zugänglich ausgebildet sind, ist eine feste Verbindung möglich.

Vorzugsweise ist das erste Verbindungsmittel als im Wesentlichen horizontal wirkendes Verbindungsmittel ausgebildet. Durch diese im Wesentlichen horizontal wirkende Ausrichtung muss das Verbindungsmittel nicht in Richtung Kraftfahrzeugboden und eventuell durch diesen hindurch montiert werden, sondern kann im Wesentlichen parallel zu dem Kraftfahrzeugboden ausgerichtet werden. Hierdurch ist keine zusätzliche Abdichtung des beispielsweise Kraftfahrzeugbodens notwendig und die Zugänglichkeit seitlich von dem Kraftfahrzeug ist erleichtert.

Darüber hinaus ist bevorzugt, dass das erste Verbindungsmittel als Durchgangsöffnung ausgebildet ist, um zusammen mit mindestens einem zweiten Verbindungsmittel eine Verbindung ausgewählt aus der Gruppe umfassend Steck- und/oder Schraubverbindungen zu realisieren.

Somit lässt sich die Crashbox in die Öffnung des Trägerrahmens einschieben und über eine entsprechende Verbindung wie beispielsweise eine Schraubverbindung realisieren. Diese Wahl der Verbindung lässt sich auch leicht automatisieren und etwa in einer teil- oder vollautomatischen Produktionsstraße einsetzen.

Darüber hinaus ist das Profil der Crashbox bevorzugt einteilig ausgebildet. Hierdurch sind keine weiteren aufwendigen Montageschritte zur Herstellung der verschiedenen Kammern der Crashbox erforderlich, beispielsweise keine Verbindungsvorgänge von mehreren Kammern miteinander.
Bevorzugt ist, dass das Profil mittels eines Strangpressverfahrens oder dergleichen hergestellt. Das Profil lässt sich so mittels einer Matrize problemlos formen und in großen Mengen herstellen. Das Kürzen mindestens einer der Kammern auf eine vorgegeben Länge kann leicht mittels eines Präge- oder anderen Ausnehmverfahrens hergestellt werden. Hierzu ist lediglich ein weiterer Schritt, nämlich das Schneiden oder Heraustrennen des überschüssigen Teils erforderlich.

Hierzu ist bevorzugt, dass das Profil auf einem strangpressfähigen Material ausgewählt aus der Gruppe umfassend Metalle, Aluminium und dergleichen ausgebildet ist. Dieses Material weist zudem den Vorteil auf, dass bei einer Aufnahme von Energie dieses sich entsprechend optimal verformt und dabei einen Großteil der Energie aufnimmt.

Um eine entsprechende Verformung zu erreichen ist bevorzugt, dass die Wandung, welche die Kammern umgibt, unterschiedliche Wandstärken für unterschiedliche Deformationen aufweist. So lassen sich beispielsweise Anfalthilfen beim Zusammenfalten des Profils im Falle eines Unfalls realisieren. Durch die unterschiedlichen Materialstärken der verschiedenen Wandungen lässt sich gezielt eine Faltung einleiten, wenn es zum Unfall kommt, ohne dass zusätzliche Bauteile benötigt werden.

Eine bevorzugte Ausführungsform sieht vor, dass das Profil eine dritte Kammer aufweist, welche gegenüber der Kammer mit dem vorspringenden Bereich ebenfalls verkürzt ausgebildet ist, und so zu den beiden anderen Kammern angeordnet ist, dass die Kammer mit dem vorspringenden Bereich sandwichartig zwischen den beiden verkürzten Kammern angeordnet ist. Auf diese Weise entstehen zwei Anschläge, welche eine Stützung des Profils an dem Trägerrahmen ermöglichen. Hierzu erreicht man eine zusätzliche Festigkeit. Zudem ist das Profil so genauer an dem Kraftfahrzeugrahmen ausrichtbar.

Die Erfindung schließt weiter die technische Lehre ein, dass eine Dämpfungsanordnung zur Aufnahme von Aufprallenergie insbesondere für ein Kraftfahrzeug umfasst: einen Trägerrahmen mit einer Aufnahmeöffnung zum Einschieben einer Crashbox und eine erfindungsgemäße Crashbox, wobei die Innenkontur der Aufnahmeöffnung im Wesentlichen der Außenkontur des vorspringenden Bereichs der Crashbox entspricht, um die Crashbox mittels Einschieben des vorstehenden Bereichs in der Aufnahmeöffnung aufzunehmen. Die Außenkontur der mittleren Kammer oder der Kammer mit dem vorstehenden Bereich bzw. genauer die Kontur des vorspringenden Bereichs hat im Wesentlichen die Form der Innenkontur der Öffnung des Hinterrahmens oder des Vorderrahmens im korrespondierenden Bereichs.
Hierbei kann es unter anderem z.B. durch Toleranzen zu leichten Abweichungen hinsichtlich der Konturen kommen.
Um trotz dieser auftretenden Toleranzen die Montage der Crashbox an dem Rahmen zu ermöglichen, weist die mittlere Kammer eine geringfügig kleinere Höhe auf als die Öffnung des Rahmens, damit das Einstecken aus einer etwas erhöhten Position bzw. auf einer etwas erhöhten Position leichter möglich ist.
Insbesondere weist der Hinterrahmen eine trapezförmige Kontur auf, was bei einer optimierten Anpassung zwangsweise auch zu einer trapezförmigen Kontur der Aufnahmeöffnung führt.
Somit weist die Außenkontur der mittleren Kammer oder der Kammer mit dem vorspringenden Bereich im Querschnitt im Wesentlichen die Form der Innenkontur des Hinterrahmens zumindest im unteren Teil auf. Um trotz möglicher, auftretender Toleranzen eine einfache Montage zu ermöglichen, weist die Kammer mit dem vorspringenden Bereich eine geringfügig kleinere Höhe auf, als die korrespondierende Aufnahmeöffnung des Trägerrahmens, um das Einstecken oder Einschieben auf einer erhöhten Position zu erleichtern. Die Trapezform des Trägerrahmens, der bevorzugt ein Hinterrahmen ist, führt dazu, dass beim Einführen der Crashbox in erhöhter Position ein Luftspalt zwischen Crashbox und Trägerrahmen auftritt. Erreicht die Crashbox ihre Endlage, insbesondere ihre vertikale Endlage, wird dieser Luftspalt reduziert. Die Ausrichtung der Crashbox zum Trägerrahmen in der Endlage kann zusätzlich mittels einer zusätzlichen Verschraubung oder anderer Verbindungsmittel unterstützt werden, wobei diese vorzugsweise Schraubenverbindung dann die Crashbox nach unten zieht, Richtung Boden der Aufnahmeöffnung, bis die Crashbox auf dem Boden der Aufnahmeöffnung des Trägerrahmens aufliegt.
Bevorzugt ist, dass weiter zweite Verbindungsmittel umfasst sind, welche zu den ersten Verbindungsmitteln der Crashbox korrespondieren und mit diesen zusammenwirken, um eine zusätzliche Verbindung zwischen dem Trägerrahmen und der Crashbox zu realisieren. Die ersten Verbindungsmittel und die zweiten Verbindungsmittel sind im Wesentlichen in horizontaler Richtung ausgerichtet. Somit erfolgt die Hauptbefestigung der Crashbox am Rahmen mittels horizontaler Verschraubung oder dergleichen, welche durch den Hinterrahmen hindurchgeht und eine kraftschlüssige Verbindung zur Crashbox bildet. Somit stellt die horizontale Verbindung, insbesondere die horizontale Schraubenverbindung die Hauptbefestigung der Crashbox am Hinterrahmen da, wobei die Verbindung(-smittel) durch den Hinterrahmen quer hindurch verlaufen. Damit die Verbindung, insbesondere die Verschraubung bei Krafteinleitung durch einen Aufprall nicht das Rahmenmaterial auflaiben, sind entsprechende Verstärkungsmittel vorzusehen.

Bevorzugt ist deshalb, dass die Dämpfungsanordnung weiter Verstärkungsmittel umfassend einen Verstärkungsbereich an der Außenkontur des Trägerrahmens umfasst, im Bereich, in dem die Verbindungsmittel miteinander wirken, um ungewollte Beschädigungen in diesen, durch die Verbindungsmittel beeinflussten oder beeinflussbaren Bereich zu vermeiden und/oder zu verringern. Beispielsweise könnte durch eine Verbindung mittels Schrauben bei Krafteinleitung durch einen Aufprall sich das Rahmenmaterial ausleiben und somit zu ungewollten Deformationen führen. Um dies und weitere Schädigungen zu verhindern, sind bestimmte Verstärkungen vorzusehen. Vorzugsweise ist der Verstärkungsbereich angeschweißt und im Auflagebereich der Verbindungsmittel, z.B. der Schraubenköpfe, so verprägt, dass eine zur Schraubrichtung oder Wirkrichtung der Verbindungsmittel rechtwinklige Auflagefläche entsteht, um die wegen der trapezförmigen oder aufgrund beispielsweise von Entformung winkligen Seitenwände der Rahmen auszugleichen. Um eine eingeleitete Kraft gleichmäßig auf den gesamten Hinterrahmenquerschnitt oder Vorderrahmenquerschnitt zu verteilen, stützen sich die zurückgeschnittenen Kammern in Längsrichtung an der Fahrzeugstruktur ab. Die obere Kammer leitet hierbei die Kraft mit der horizontalen Wand direkt in den Bodenflansch ein. Die untere Kammer im Falle eines Dreikammerprofils stützt sich an der Hinterrahmenverstärkung ab, die den Hinterrahmen nach unten verlängert und für eine größere Abstützbasis bildet.
In einem Ausführungsbeispiel kann aus der horizontalen Wand der unteren Kammer oder dem Boden, beispielsweise bei einem Dreikammerprofil ein vertikaler Flansch gebildet sein, der mit dem nach unten verlängerten Rahmenschuh/-verstärkung verschraubt wird. Außerdem kann eine Kunststoffplatte vorgesehen werden, welche die eingeleiteten Kräfte von den Profilkanten in die Struktur verteilt. Auch ist es möglich, die obere und untere Wand der äußeren Kammern so zu beschneiden und nach Innen abzukanten, und so eine Schließkette für die äußeren Kammern zu bilden, um eine gleichmäßige Krafteinleitung zu realisieren. Die seitlichen Wände der äußeren Kammern können dabei leicht konkav ausgebildet werden. Zur Erzielung eines gleichmäßigen Faltens der Crashbox bei einem Aufprall, kann durch geringfügig unterschiedliche Wandstärken der einzelnen Kammern die Unsymmetrie des Aluminiumprofils kompensiert werden, welches eines der speziellen Vorteile von Aluminiumstrangpressprofilen bei dieser Anwendung darstellt.

Weitere die Erfindung verbessernde Maßnahmen sind in den Unteransprüchen angegeben oder werden nachstehend gemeinsam mit der Beschreibung mehrerer bevorzugter Ausführungsbeispiele der Erfindung anhand der Figuren näher dargestellt. Es zeigen:
- Fig. 1: eine schematische, perspektivische Ansicht einer erfindungsgemäßen Crashbox mit drei Kammern;
- Fig. 2: eine schematische, perspektivische Ansicht der Crashbox gemäß Fig. 1 in einem anderen Blickwinkel;
- Fig. 3: eine schematische, perspektivische Ansicht eines Ausschnitts einer Dämpfungsanordnung mit Trägerrahmen und Crashbox gemäß Fig. 1;
- Fig. 4: eine schematische, perspektivische Ansicht eines anderen Ausschnitts einer Dämpfungsanordnung mit Trägerrahmen, Crashbox und Verbindungsmitteln;
- Fig. 5: eine schematische, perspektivische Ansicht eines anderen Ausschnitts einer Dämpfungsanordnung gemäß Fig. 4 in einem anderen Blickwinkel; und
- Fig. 6: eine schematische, perspektivische Ansicht eines Ausschnitts der Dämpfungsanordnung, welche die Verbindungsmittel vergrößert zeigt.

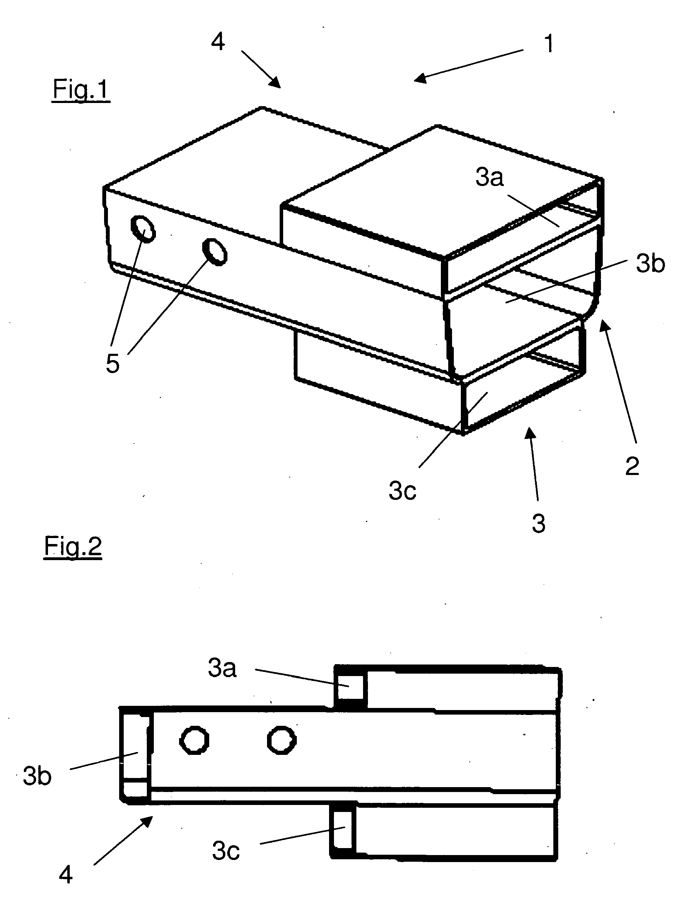

Fig. 1 zeigt eine schematische, perspektivische Ansicht einer erfindungsgemäßen Crashbox 1. Die Crashbox 1 ist nach einem Stranggussverfahren hergestellt und umfasst ein Profil 2 mit drei Kammern 3, eine obere, erste Kammer 3a, eine mittlere, zweite Kammer 3b und eine untere, dritte Kammer 3c. Das Profil 3 ist durch eine Wandung ausgebildet, welche die Kammern 3 umgibt. Die Kammern 3 sind längs in eine Einschubrichtung oder eine Stranggussrichtung rohrförmig ausgebildet. Die erste und dritte Kammer 3a, 3c bzw. die sie umgebende Wandung ist in diese Einschub- oder Längsrichtung kürzer ausgebildet als die zweite Kammer 3b bzw. die sie umgebende Wandung, so dass ein vorspringender Bereich 4 gebildet ist. Der vorspringenden Bereich 4 ist dazu ausgebildet, in eine Trägerrahmenöffnung eingeschoben zu werden. Die kürzer ausgebildeten Kammern 3a, 3c bilden mit einer ihrer Stirnseiten eine Art Anschlag in Bezug auf die Einschubrichtung. An dem vorspringenden Bereich 4 sind Vermindungsmittel 5 in Form von im Wesentlichen horizontal zur einer gedachten Kraftfahrzeugbodenebene verlaufenden Durchgangsöffnung ausgebildet. Die Durchgangsöffnungen, genauer die zwei Durchgangsbohrungen sind insbesondere zur Verbindung der Crashbox 1 mit einem Trägerrahmen des Kraftfahrzeugs gedacht und sind als zusätzliche Sicherung des in eine Öffnung des Trägerrahmens eingeschobene Crashbox 1 im montierten Zustand gedacht. Wie auch in Fig. 2 ersichtlich, sind die Kammern 3 hinsichtlich ihres Profilquerschnitts unterschiedlich, jedoch die erste und die dritte Kammer 3a, 3c in ihrer Länge in Einschubrichtung im Wesentlichen gleich lang ausgebildet.
Fig. 2 zeigt eine schematische, perspektivische Ansicht der Crashbox 1 gemäß Fig. 1 in einem anderen Blickwinkel. Deutlich ist erkennbar, dass die Länge der ersten und dritten Kammer 3a, 3c etwa gleich lang ist, wobei die Länge der zweiten Kammer 3b die der Kammern 3a, 3b deutlich hinsichtlich ihrer Länge in eine Einschubrichtung übertrifft. Auf der Seite entgegengesetzt zur Einschubrichtung schließen die Kammern 3a, 3b, 3c mit ihren Stirnseiten im Wesentlichen bündig ab. Der vorspringenden Bereich 4 kann jede Länge aufweisen, ist vorliegend jedoch etwa genauso Lang wie die Kammern 3a, 3c bzw. länger ausgebildet.
Wie bereits erwähnt, ist die Crashbox mittels einem Stranggussverfahren hergestellt. Um nun die unterschiedlichen Längen auszubilden, ist in einem Schneide- oder Trennverfahren die ursprünglich mit gleich langen Kammern ausgebildete Crashbox 1 entlang der gestrichelten Linien geschnitten oder getrennt worden und die entsprechenden Teile der Kammern bzw. der Wandung wurden entfernt. Das durch die gestrichelte Linien dargestellte Schnittmuster kann entsprechend an die gewünschte Endkontur jeweils angepasst werden.
Zu erkennen sind auch die beiden im Wesentlichen horizontal verlaufenden Durchgangsöffnungen. Diese weisen einen Kreisquerschnitt auf, wobei jedoch auch jeder andere Querschnitt grundsätzlich denkbar ist. Die Durchgangsöffnungen verlaufen quer zur Einschubrichtung durch das gesamte Profil bzw. die zweite Kammer 3b.

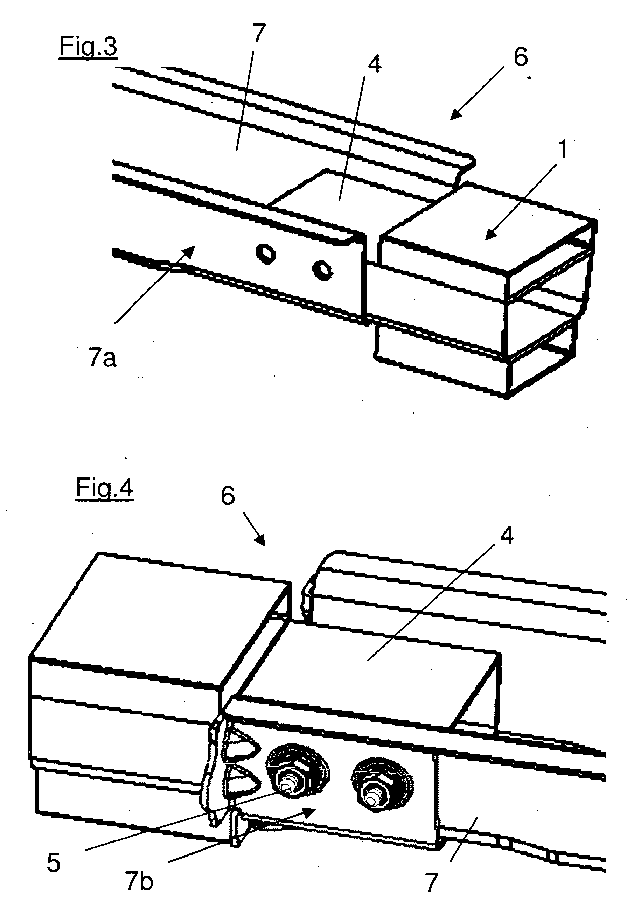

Fig. 3 zeigt nun eine schematische, perspektivische Ansicht eines Ausschnitts einer Dämpfungsanordnung 6 mit einem Trägerrahmen 7 und einer Crashbox 1 gemäß Fig. 1. Der Trägerrahmen 7, der hier als offener Hinterrahmen eines Kraftfahrzeugs ausgebildet ist, weist eine in Längsrichtung, das heiß ein Einschubrichtung, ausgebildet Aufnahmeöffnung auf, wobei deren Innenkontur zumindest teilweise einen Querschnitt aufweist, welcher zu der Außenkontur der einzuschiebenden Crashbox 1 bzw. genauer deren vorspringendem Bereich 4 korrespondiert. Insbesondere korrespondierte der hintere Rahmenteil 7a mit dem vorspringenden Bereich 4 der Crashbox 1. Im vorliegenden Fall ist die Aufnahmeöffnung des Trägerrahmens 7 zur Verdeutlichung der Anordnung nicht umfänglich geschlossen dargestellt, sondern nach oben offen dargestellt. Obwohl auch die nach oben zumindest zum Teil offene Ausbildung theoretisch möglich ist, ist jedoch bevorzugt, dass die Aufnahmeöffnung des Trägerrahmens 7 umfänglich geschlossen ausgebildet ist. Insbesondere im Hinblick auf die geforderte Steifigkeit bzw. Festigkeit ist die umfänglich geschlossene Ausbildung der Aufnahmeöffnung des Trägerrahmens bevorzugt. Die Trägerrahmenaufnahmeöffnung weist im Wesentlichen den gleichen Querschnitt wie der vorspringende Bereich 4 der Crashbox 1 auf, wobei der Querschnitt der Trägerrahmenaufnahmeöffnung entsprechend des gewünschten Spiels zwischen beiden Teilen ausgebildet ist, bevorzugt aber ein geringes Spiel aufweist.
In Fig. 3 ist die Crashbox 1 bzw. der vorspringende Bereich 4 teilweise in die Trägerrahmenaufnahmeöffnung eingeschoben, ohne dass ein Kontakt zwischen den zum vorspringenden Bereich 4 weisenden Stirnflächen der ersten und dritten Kammer mit dem Trägerrahmen 7 zustande gekommen ist, das heißt, die Crashbox 1 ist noch nicht bis zum Anschlag in die Trägerrahmenaufnahmeöffnung eingesetzt. Aus diesem Grunde sind auch noch nicht alle Verbindungselemente dargestellt. Einen Ausschnitt einer Anordnung in der die Crashbox 1 komplett in die Trägerrahmenaufnahmeöffnung eingesetzt ist, zeigt Fig. 4.

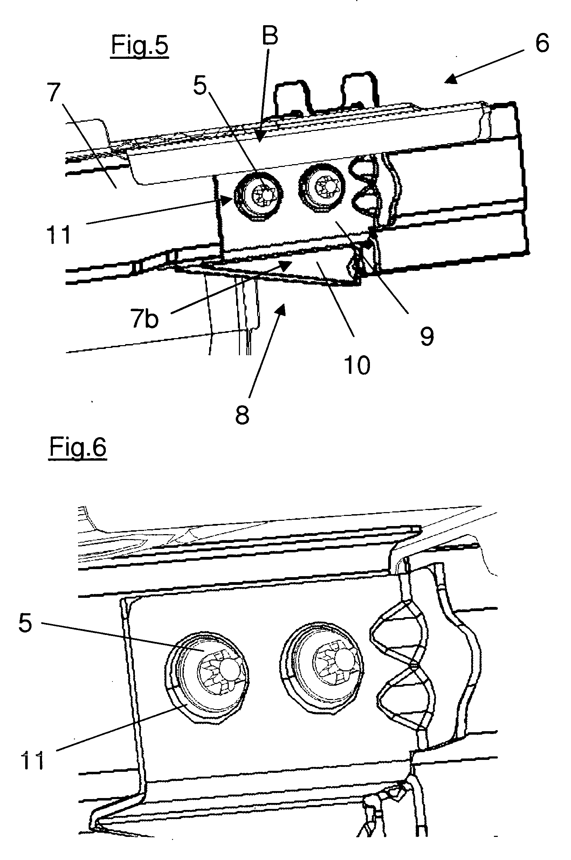

Fig. 4 zeigt eine schematische, perspektivische Ansicht eines anderen Ausschnitts einer Dämpfungsanordnung 6 mit einem Trägerrahmen 7, einer Crashbox 1 und Verbindungsmitteln 5. In Fig. 4 ist der vorspringende Bereich 4 der Crashbox komplett bis zum Anschlag in die Aufnahmeöffnung eingesetzt und mit Verbindungsmitteln 5 mit dem Trägerrahmen 7 gesichert. Die Verbindungsmittel 5 umfassen die Durchgangsöffnungen sowie durch die Durchgangsöffnungen verlaufende Schrauben- und oder Streckmittel, welche so eine im Wesentlichen formschlüssige Verbindung realisieren. Die Schrauben- oder Steckmittel weisen wiederum ein Kopf- und ein Mutterelement auf, was ein axiales Bewegen aus den Durchgangsöffnungen verhindert. Um einer hohen Belastung stand zu halten, sind Verstärkungsmittel für die Dämpfungsanordnung 6 vorgesehen. Diese sind in Fig. 5 deutlicher zu erkennen. Zudem weist der hintere Rahmenteil eine als Rahmenschuh 7b ausgebildete Verstärkung auf, wodurch die Steifigkeit bzw. Festigkeit des Trägerrahmens 7 zudem erhöht ist.
Fig. 5 zeigt eine schematische, perspektivische Ansicht eines anderen Ausschnitts einer Dämpfungsanordnung 6 gemäß Fig. 4 in einem anderen Blickwinkel. Insbesondere sind hier Verstärkungsmittel 8 ausgebildet, die vorliegend ein an die Außenkontur des Trägerrahmens angepasstes, den Trägerrahmen zumindest teilweise umgebendes Blechelement 9 mit Verstärkungsrippen 10 sowie einen Verstärkungsbereich 11 umfassen. Die Verstärkungsmittel 8 können zusätzlich einen Rahmenschuh 7b umfassen oder die Verstärkungsmittel 8 sind zusätzlich zu einem Rahmenschuh 7b ausgebildet. Die Verbindungsmittel 5 - Schraubenmittel sowie Durchgangsöffnung - durchdringen sowohl den Verstärkungsbereich 11, das Blechelement 9, den Trägerrahmen 7 als auch das Profil der Crashbox in im Wesentlichen horizontaler Richtung quer zur Einschubrichtung. Das Blechelement 9, was wie beschrieben Bestandteil des Rahmenschuhs 7a oder ein separates Verstärkungsmittel 8 sein kann, ist dabei an die Außenkontur des Trägerrahmens 7 angepasst und weist im Wesentlichen die gleiche Kontur auf wie die Außenkontur des Trägerrahmens 7, das heißt die Innenkontur des Blechelements 9 entspricht im Wesentlichen der Außenkontur des Trägerrahmens 7. Die Verstärkungsrippen 10 dienen im Wesentlichen der Erhöhung der Steifigkeit und der besseren Abstützung und sind in Längsrichtung geneigt ausgebildet. Da der Trägerrahmen 7 im Querschnitt betrachtet ebenfalls geneigt, das heißt trapezförmig ausgebildet ist, und damit auch das Blechelement 9 entsprechend ausgebildet ist, ist zur besseren Verbindung von Trägerrahmen 7 und Crashbox über die Verbindungsmittel 5 der Verbindungsbereich 11 als eine wulstartige Verdickung oder eine Materialverstärkung im Bereich der Verbindungsmittel 5 ausgebildet. Dieser ist in der vergrößerten Darstellung in Fig. 6 deutlicher dargestellt. Schematisch ist auch der hintere Boden B dargestellt, um schematisch die Gesamtanordnung darzustellen.
Fig. 6 zeigt eine schematische, perspektivische Ansicht eines Ausschnitts der Dämpfungsanordnung, welche die Verbindungsmittel 5 und den Verstärkungsbereich 11 vergrößert zeigt. Da in Querschnittsansicht die Kontur des Trägerrahmens 7 und damit auch des Blechelements leicht schräg - trapezförmig - verlaufen in Bezug auf die plane Oberfläche beispielsweise des Kopf- oder Mutterelements der Schraubenmittel, ist ein wulstartiger Verstärkungsbereich 11 vorgesehen, der ebenfalls schräg so ausgebildet ist, dass diese Lücke zwischen beispielsweise Mutterelement bzw. Kopfelement und der Oberfläche des Trägerrahmens bzw. des Blechelements ausgeglichen ist und eine im Wesentlichen plane Anlagefläche für die Schraubenmittel realisiert ist. Dieser wulstartige Verstärkungsbereich 11 mit unterschiedlicher Stärke ist schematisch durch den in Fig. 6 dargestellten Kreis sowie den darauf weisenden Pfeil verdeutlicht.

### Bezugszeichenliste

- **1**: Crashbox
- **2**: Profil (Wandung)
- **3**: Kammer
- **3a**: erste Kammer
- **3b**: zweite Kammer
- **3c**: dritte Kammer
- **4**: vorspringender Bereich
- **5**: Verbindungsmittel
- **6**: Dämpfungsanordnung
- **7**: Trägerrahmen
- **7a**: hinterer Rahmenteil
- **7b**: Rahmenschuh
- **8**: Verstärkungsbereich
- **9**: Blechelement
- **10**: Verstärkungsrippe
- **B**: hinterer Boden

## Patentansprüche

1. Grundplattenlose Crashbox (1) zur Aufnahme von Aufprallenergie, geeignet zum Einschieben in einen korrespondierenden Trägerrahmen (7), insbesondere eines Kraftfahrzeugträgerrahmens, in einer Einschubrichtung, mit einem mindestens eine erste Kammer (3a) umfassenden verformbaren Profil (2), **dadurch gekennzeichnet, dass** das verformbare Profil (2) ferner eine zur ersten Kammer (3a) quer zur Einschubrichtung benachbarte zweite Kammer (3b) umfasst, dass die Kammern (3a, 3b) je durch eine Wandung des Profils (2) umgeben sind,
wobei eine der Kammern (3, 3a) in Einschubrichtung kürzer ausgebildet ist, so dass die andere Kammer (3, 3b) einen vorspringenden Bereich (4) aufweist, welcher in den korrespondierenden Trägerrahmen (7) einschiebbar ist, um eine Kopplung zwischen Crashbox (1) und Trägerrahmen (7) zu realisieren und wobei
der vorspringende Bereich (4) mindestens ein erstes Verbindungsmittel (5) zum Verbinden des vorspringenden Bereichs (4) mit dem Trägerrahmen (7) aufweist.

2. Grundplattenlose Crashbox (1) gemäß Anspruch 1, **dadurch gekennzeichnet, dass**
das erste Verbindungsmittel (5) als im Wesentlichen horizontal wirkendes Verbindungsmittel (5) ausgebildet ist.

3. Grundplattenlose Crashbox (1) gemäß Anspruch 1 oder 2, **dadurch gekennzeichnet, dass**
das erste Verbindungsmittel (5) als Durchgangsöffnung ausgebildet ist, um zusammen mit mindestens einem zweiten Verbindungsmittel (5) eine Verbindung ausgewählt aus der Gruppe umfassend Steck- und/oder Schraubverbindungen zu realisieren.

4. Grundplattenlose Crashbox (1) gemäß einem der Ansprüche 1 bis 3, **dadurch gekennzeichnet, dass**
das Profil (2) einteilig ausgebildet ist.

5. Grundplattenlose Crashbox (1) gemäß einem der Ansprüche 1 bis 4, **dadurch gekennzeichnet, dass**
das Profil (2) mittels einem Strangpressverfahren oder dergleichen hergestellt ist.

6. Grundplattenlose Crashbox (1) gemäß einem der Ansprüche 1 bis 5, **dadurch gekennzeichnet, dass**
das Profil (2) aus einem strangpressfähigem Material ausgewählt aus der Gruppe umfassend Metalle, Aluminium und dergleichen ausgebildet ist.

7. Grundplattenlose Crashbox (1) gemäß einem der Ansprüche 1 bis 6, **dadurch gekennzeichnet, dass**
die Wandung, welche die Kammern (3) umgibt, unterschiedliche Wandstärken für unterschiedliche Deformationen aufweist.

8. Grundplattenlose Crashbox (1) gemäß einem der Ansprüche 1 bis 7, **dadurch gekennzeichnet, dass**
das Profil (2) eine dritte Kammer (3c) aufweist, welche gegenüber der Kammer (3, 3b) mit dem vorspringenden Bereich (4) ebenfalls verkürzt ausgebildet ist und so zu den beiden anderen Kammern (3a, 3c) angeordnet ist, dass die Kammer (3b) mit dem vorspringenden Bereich (4) sandwichartig zwischen den beiden verkürzten Kammern (3a, 3c) angeordnet ist.

9. Dämpfungsanordnung (6) zur Aufnahme von Aufprallenergie, insbesondere für ein Kraftfahrzeug, umfassend:
einen Trägerrahmen (7) mit einer Aufnahmeöffnung zum Einschieben einer Crashbox (1) und
eine Crashbox (1) nach einem der Ansprüche 1 bis 8,
wobei die Innenkontur der Aufnahmeöffnung im Wesentlichen der Außenkontur des vorspringenden Bereichs (4) der Crashbox (1) entspricht, um die Crashbox (1) mittels Einschieben des vorspringenden Bereichs (4) in der Aufnahmeöffnung aufzunehmen.

10. Dämpfungsanordnung (6) nach Anspruch 9, weiter umfassend:
zweite Verbindungsmittel (5), welche zu den ersten Verbindungsmitteln (5) der Crashbox (1) korrespondieren und mit diesen zusammenwirken, um eine zusätzliche Verbindung zwischen dem Trägerrahmen und der Crashbox (1) zu realisieren.

11. Dämpfungsanordnung (6) nach Anspruch 9 oder 10,
wobei die ersten Verbindungsmittel (5) und die zweiten Verbindungsmittel (5) im Wesentlichen in horizontaler Richtung ausgerichtet sind.

12. Dämpfungsanordnung (6) nach einem der Ansprüche 9 bis 11, weiter umfassend:
Verstärkungsmittel (8) umfassend einen Verstärkungsbereich (11) an der Außenkontur des Trägerrahmens (7) im Bereich, in dem die Verbindungsmittel (5) miteinander wirken, um ungewollte Beschädigungen in diesem durch die Verbindungsmittel (5) beeinflussbaren Bereich zu vermeiden und/oder zu verringern.

## Claims

1. A base-plate-free crashbox (1) for absorbing impact energy, suitable for insertion into a corresponding support frame (7), especially a motor vehicle support frame, in one insertion direction, comprising at least one deformable profile (2) having a first chamber (3a), **characterized in that** the deformable profile (2) further comprises a second chamber (3b) which is adjacent to the first chamber (3a) transversely to the insertion direction, that the chambers (3a, 3b) are respectively enclosed by a wall of the profile (2), wherein one of the chambers (3, 3a) is provided with a shorter configuration in the insertion direction so that the other chamber (3, 3a) has a protruding area (4) which can be slid into the corresponding support frame (7) in order to realize a coupling between the crashbox (1) and the support frame (7), and wherein the protruding area (4) comprises at least one first connecting means (5) for connecting the protruding area (4) with the support frame (7).

2. A base-plate-free crashbox (1) according to claim 1, **characterized in that** the first connecting means (5) is arranged as a substantially horizontally acting connecting means (5).

3. A base-plate-free crashbox (1) according to claim 1 or 2, **characterized in that** the first connecting means (5) is arranged as a passage opening in order to realize a connection chosen from the group of plug-in and/or screwed connections together with at least one second connecting means (5).

4. A base-plate-free crashbox (1) according to one of the claims 1 to 3, **characterized in that** the profile (2) is integrally arranged.

5. A base-plate-free crashbox (1) according to one of the claims 1 to 4, **characterized in that** the profile (2) is produced by means of an extrusion forming process or the like.

6. A base-plate-free crashbox (1) according to one of the claims 1 to 5, **characterized in that** the profile is made of a material capable of extrusion, chosen from the group comprising metals, aluminum and the like.

7. A base-plate-free crashbox (1) according to one of the claims 1 to 6, **characterized in that** the wall which encloses the chambers (3) has different wall thicknesses for different deformations.

8. A base-plate-free crashbox (1) according to one of the claims 1 to 7, **characterized in that** the profile (2) comprises a third chamber (3c) which is also arranged in a shorter fashion in comparison with the chamber (3, 3b) with the protruding area (4) and is arranged in relation to the other two chambers (3a, 3c) in such a way that the chamber (3b) with the protruding area (4) is arranged in a sandwich-like manner between the two shortened chambers (3a, 3c).

9. A damping arrangement (6) for absorbing impact energy, especially for a motor vehicle, comprising:
a support frame (7) with a receiving opening for inserting a crashbox (1), and
a crashbox (1) according to one of the claims 1 to 8,
wherein the inside contour of the receiving opening substantially corresponds to the outside contour of the protruding area (4) of the crashbox (1) in order to accommodate the crashbox (1) in the receiving opening by inserting the protruding area (4).

10. A damping arrangement (6) according to claim 9, further comprising:
second connecting means (5) which correspond to the first connecting means (5) of the crashbox (1) and cooperate with them in order to realize an additional connection between the support frame and the crashbox (1).

11. A damping arrangement (6) according to claim 9 or 10, wherein the first connecting means (5) and the second connecting means (5) are substantially aligned in the horizontal direction.

12. A damping arrangement (6) according to one of the claims 9 to 11, further comprising:
reinforcing means (8), comprising a reinforcing area (11) on the outside contour of the support frame (7) in the region in which the connecting means (5) act together in order to prevent and/or reduce unintended damage in this area which can be influenced by the connecting means (5).

## Revendications

1. Caisson anticollision (1) sans plaque de fond destiné à absorber l'énergie d'un impact, apte à être inséré dans un châssis portant (7) correspondant, en particulier un châssis portant de véhicule à moteur, dans une direction d'insertion, avec un profilé déformable (2) comprenant au moins un premier compartiment (3a), **caractérisé en ce que** le profilé déformable (2) comprend en outre un deuxième compartiment (3b) voisin du premier compartiment (3a) perpendiculairement au sens d'insertion et **en ce que** les compartiments (3a, 3b) sont entourés chacun par une paroi du profilé (2), l'un des compartiments (3, 3a) étant plus court dans le sens d'insertion, de sorte que l'autre compartiment (3, 3b) présente une partie en saillie (4) qui peut être insérée dans le châssis portant (7) correspondant pour réaliser un couplage entre le caisson anticollision (1) et le châssis portant (7), et la partie en saillie (4) présentant au moins un premier moyen de liaison (5) pour relier la partie en saillie (4) au châssis portant (7).

2. Caisson anticollision (1) sans plaque de fond selon la revendication 1, **caractérisé en ce que** le premier moyen de liaison (5) est conformé comme un moyen de liaison (5) agissant pour l'essentiel dans le sens horizontal.

3. Caisson anticollision (1) sans plaque de fond selon la revendication 1 ou 2, **caractérisé en ce que** le premier moyen de liaison (5) est conformé comme une ouverture traversante, afin de réaliser avec au moins un deuxième moyen de liaison (5) une liaison choisie parmi le groupe comprenant les liaisons emboîtées et/ou vissées.

4. Caisson anticollision (1) sans plaque de fond selon l'une des revendications 1 à 3, **caractérisé en ce que** le profilé (2) est conformé d'une seule pièce.

5. Caisson anticollision (1) sans plaque de fond selon l'une des revendications 1 à 4, **caractérisé en ce que** le profilé (2) est fabriqué au moyen d'un procédé d'extrusion ou similaire.

6. Caisson anticollision (1) sans plaque de fond selon l'une des revendications 1 à 5, **caractérisé en ce que** le profilé (2) est fait d'un matériau extrudable choisi parmi le groupe comprenant les métaux, l'aluminium et similaires.

7. Caisson anticollision (1) sans plaque de fond selon l'une des revendications 1 à 6, **caractérisé en ce que** la paroi entourant les compartiments (3) présente des épaisseurs de paroi différentes pour des déformations différentes.

8. Caisson anticollision (1) sans plaque de fond selon l'une des revendications 1 à 7, **caractérisé en ce que** le profilé (2) présente un troisième compartiment (3c) qui est également raccourci par rapport au compartiment (3, 3b) comportant la partie en saillie (4) et qui est ainsi disposé par rapport aux deux autres compartiments (3a, 3c) de telle manière que le compartiment (3b) comportant la partie en saillie (4) soit disposé en sandwich entre les deux compartiments raccourcis (3a, 3c).

9. Dispositif d'amortissement (6) destiné à absorber l'énergie d'un impact, en particulier pour un véhicule à moteur, comprenant :
un châssis portant (7) avec une ouverture de réception pour l'insertion d'un caisson anticollision (1) et
un caisson anticollision (1) selon l'une des revendications 1 à 8,
dans lequel le contour intérieur de l'ouverture de réception correspond pour l'essentiel au contour extérieur de la partie en saillie (4) du caisson anticollision (1), afin de recevoir le caisson anticollision (1) par l'insertion de la partie en saillie (4) dans l'ouverture de réception.

10. Dispositif d'amortissement (6) selon la revendication 9, comprenant en outre des deuxièmes moyens de liaison (5) qui correspondent aux premiers moyens de liaison (5) du caisson anticollision (1) et coopèrent avec ceux-ci pour réaliser une liaison supplémentaire entre le châssis portant et le caisson anticollision (1).

11. Dispositif d'amortissement (6) selon la revendication 9 ou 10, dans lequel les premiers moyens de liaison (5) et les deuxièmes moyens de liaison (5) sont orientés pour l'essentiel dans le sens horizontal.

12. Dispositif d'amortissement (6) selon l'une des revendications 9 à 11, comprenant en outre des moyens de renfort (8) comprenant une zone de renfort (11) sur le contour extérieur du châssis portant (7) dans la zone dans laquelle les moyens de liaison (5) coopèrent entre eux, afin d'éviter et/ou de réduire les détériorations involontaires dans cette zone pouvant être soumise à l'action des moyens de liaison (5).
